# EUROPEAN PATENT SPECIFICATION

(11) **EP 2 237 342 B1**
(45) Date of publication and mention of the grant of the patent: **28.08.2013**
(21) Application number: 10155157.0
(22) Date of filing: 02.03.2010
(51) Int. Cl.: H01M 2/02, H01M 2/04, H01M 2/12, H01M 2/36

(54) **Rechargeable battery**
Wiederaufladbare Batterie
Batterie rechargeable

(30) Priority: 03.04.2009 US 166568 P; 30.11.2009 US 628184
(43) Date of publication of application: 06.10.2010
(73) Proprietor: Samsung SDI Co., Ltd., Gyeonggi-do (KR); Robert Bosch GmbH, 70442 Stuttgart (DE)
(72) Inventor: Hyung, Yoo-Eup, Yongin-si, Gyeonggi-do (KR)
(74) Representative: Rasch, Dorit

(56) References cited:
- US-A- 3 554 813
- US-A1- 2004 018 425
- US-A1- 2006 099 501

## Description

### Field of the Invention

The present invention relates to a rechargeable battery, and more particularly to a rechargeable battery which is capable of preventing explosion resulting from overheating, and having a reduced manufacturing cost.

### Description of the Related Art

A rechargeable battery can be repeatedly charged and discharged, unlike a primary battery which cannot be recharged. A low-capacity rechargeable battery is used for portable small-sized electronic devices, such as mobile phones, notebook computers, and camcorders. A large-capacity battery is widely used as a power source for driving motors, such as for hybrid vehicles.

As a kind of rechargeable battery, there is a rechargeable battery using a pouch method of coating polypropylene on an aluminum material in order to close and seal the outside of a generation element. However, the pouch method used by the rechargeable battery has a limit to the molding of the external shape of a pouch because of deformation of aluminum and polypropylene. Accordingly, it is difficult to form a pouch with a thickness of 6 to 7 mm or more. Further, the aluminum material is problematic in that the manufacturing cost is increased because the price of aluminum is relatively high. The aluminum material is also problematic in that it has a danger of explosion when abnormal overheating occurs within a rechargeable battery.

US 2004/0018425 A1 discloses a lightweight, hard and leakproof prismatic packaging structures for electrochemical devices and economical method of assembly and hermetic sealing of said structures by plastic layers attached to their metal walls in which metal welding is avoided. US 2006/0099501 A1 discloses a secondary battery having an electrode assembly with improved battery capacity. The secondary battery has a case made from an insulative material and a cap assembly including a cap plate made from an insulative material for sealing an opening to prevent the electrode assembly from being separated from the case.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a rechargeable battery having advantages of reducing the manufacturing cost and realizing a thick thickness by replacing aluminum with a metal material for closing and sealing the rechargeable battery and coupling the metal material by laser welding. The present invention has been made in an effort to provide a rechargeable battery having an advantage of preventing explosion resulting from overheating of the rechargeable battery.

Accordingly, an inventive rechargeable battery comprises a case; an electricity generation element placed within said mounting space and having at least one connecting member protruding from a side of the electricity generation element in a direction of the opening of the case; a cap assembly including: at least one electrode lead coupled to the at least one connecting member of the electricity generation element; and an insulator supporting the at least one electrode lead. The cap assembly is configured to close the case opening. The case is composed of a first metal plate and a second metal plate being coupled together to form five sides of a hexahedron, an opening being the sixth side of the hexahedron, and being configured to form a mounting space for an electricity generation element between them and at least one of the first or second metal plates is provided with a generation element mounting portion surrounded by side walls of the respective plate with flange portions protruding perpendicularly from said side walls away from the generation element mounting portion.

The cap assembly is forcibly inserted between the base member and the cover member. When the base member and the cover member are coupled together by welding, the cap assembly may be coupled between the base member and the cover member through melting.

The cap assembly may be coated with epoxy and coupled between the base member and the cover member. The insulator may be configured to have a taper shape in a width direction on both sides of a length direction, and may be made of polypropylene material.

The insulator may be made of a polymeric material having a melting point in between of 100°C to 130°C. Preferably, the insulator is made of polypropylene. The insulator may have the form of a single bar.

The tapered angle α of the tapered insulator may range from 1 ° to 10°. The tapering is performed such that the insulator gets thinner from the periphery of the case to its inside. In other words, a cross section of the insulator surface facing the at least one connecting member is smaller than the cross section of its opposing surface facing the exterior.

The insulator of the cap assembly may surround the at least one electrode lead such that the at least one electrode lead protrudes through the insulator from one side to the other side. The insulator may have a through-hole into which a plug member or vent is inserted.

The opening of the case may be identical to a short side of the case such that said short side is missing or identical to a top/bottom side of the case.

The first metal plate may comprise first flange portions and said second metal plate may comprise second flange portions for welding the second metal plate to the first flange portions of the first metal plate.

The first metal plate and second metal plate may be formed of steel, stainless steel, or a metal different from aluminum or aluminum compounds.

The cap assembly may further comprise a plurality of protrusions extending from the surface of the at least one electrode lead and mating insertion holes formed in the surface of the insulator for coupling the at least one electrode lead to the insulator by inserting the respective protrusions into the mating insertion holes. Alternatively, the cap assembly may further comprise at least one hole formed in each of the at least one electrode lead in an area where the at least one electrode lead is supported by the insulator. The cap assembly may comprise a groove formed along the periphery of the insulator contacting with the first metal plate and the second metal plate of the case. It may also comprise a metallic case covering the insulator along the periphery of the insulator which contacts with the first metal plate and the second metal plate.

The electricity generation element may have a stack form or a jelly roll form. The cover member may have a plate form.

In a rechargeable battery according to a second exemplary embodiment of the present invention, the edges of a cover member are curved in the direction of a base member direction. Cover flange portions are formed at the curved tips of the cover member. Base flange portions of a base member to which the cover flange portions are coupled may be formed along the edges of the base member.

Accordingly, a method for manufacturing a rechargeable battery is provided, comprising the steps of forming a hexahedral case by coupling together a first metal plate and a second metal plate to form five sides of the hexahedral case, the sixth side being an opening of the case, the first and second metal plates being configured to form a mounting space for an electricity generation element between them; providing an electricity generation element having at least one connecting member protruding from a side of the electricity generation element; forming a cap assembly comprising: at least one electrode lead to be coupled to the at least one connecting member of the electricity generation element; an insulator supporting the at least one electrode lead; placing said electricity generation element within said mounting space such that said at least one connecting member protrudes from a side of the electricity generation element in a direction of the opening of the case; and coupling said cap assembly to the case by press-fitting the cap assembly into the opening of the case. The first and second metal plates are coupled together via a welding process, and the cap assembly is further coupled to the case by at least partially melting the cap assembly during this welding process.

The cap assembly is at least partially covered by epoxy, which melts during a welding process to additionally fix the cap assembly to the case.

The first and second metal plates may be coupled to each other via a welding process, this welding process being said welding process for further coupling and fixing said cap assembly to said case.

A metal is used as a material for a closing and sealing configuration of the rechargeable battery, and the cover member made of a metal is coupled to the base member by laser welding. Accordingly, the manufacturing cost can be reduced, and economic efficiency can be improved.

Since the metal material is used as material for a closing and sealing configuration of the rechargeable battery, a rechargeable battery of 8 mm or more in thickness can be realized. The cap assembly is automatically broken when overheating occurs within the rechargeable battery.

Accordingly, explosion of a rechargeable battery resulting from overheating can be prevented, and the stability of a rechargeable battery can be improved.

### BRIEF DESCRIPTION OF THE DRAWINGS

FIG. 1 is an exploded perspective view schematically showing a rechargeable battery according to a first exemplary embodiment of the present invention;
FIG. 2 is a perspective view showing a state in which, when a base member and a cover member of FIG. 1 are coupled together, a cap assembly is separated from the base member and the cover member;
FIG. 3 is a perspective view schematically showing a state in which a electricity generation element of FIG. 1 and the cap assembly are coupled together;
FIG. 4 is a perspective view showing a state in which the electrode leads of the cap assembly and an insulator are coupled together;
FIG. 5 is a diagram taken along line V-V of FIG. 4;
FIG. 6 is an exploded perspective view schematically showing a rechargeable battery according to a second exemplary embodiment of the present invention;
FIG. 7 is an exploded perspective view showing a state in which the electrode leads and the insulator of a cap assembly of a rechargeable battery according to a third exemplary embodiment of the present invention are separated from each other; and
FIG. 8 is a perspective view showing a face in which the insertion holes of the insulator of FIG. 7 are formed.
FIG. 9 is a perspective view showing an assembled state of electrode leads and an insulator of a cap assembly of a rechargeable battery according to a fourth exemplary embodiment of the present invention;
FIG. 10 is a perspective view showing an assembled state of electrode leads and an insulator of a cap assembly of a rechargeable battery according to a fifth exemplary embodiment of the present invention;
FIG. 11 is a perspective view showing an assembled state of electrode leads and an insulator of a cap assembly of a rechargeable battery according to a sixth exemplary embodiment of the present invention.

### DETAILED DESCRIPTION OF THE EMBODIMENTS

A rechargeable battery according to exemplary embodiments of the present invention is described in detail with reference to the accompanying drawings. However, the present invention is not limited to the disclosed embodiments, but may be implemented in various ways. The embodiments are provided to complete the disclosure of the present invention and to allow those having ordinary skill in the art to understand the scope of the present invention. The present invention is defined by the category of the claims. The same reference numbers will be used throughout the drawings to refer to the same or like parts.

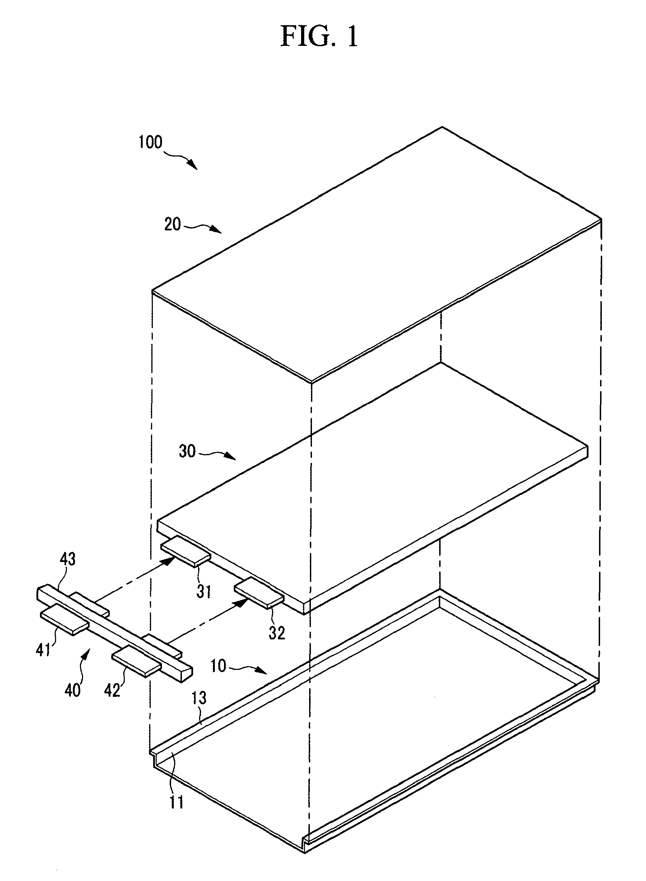

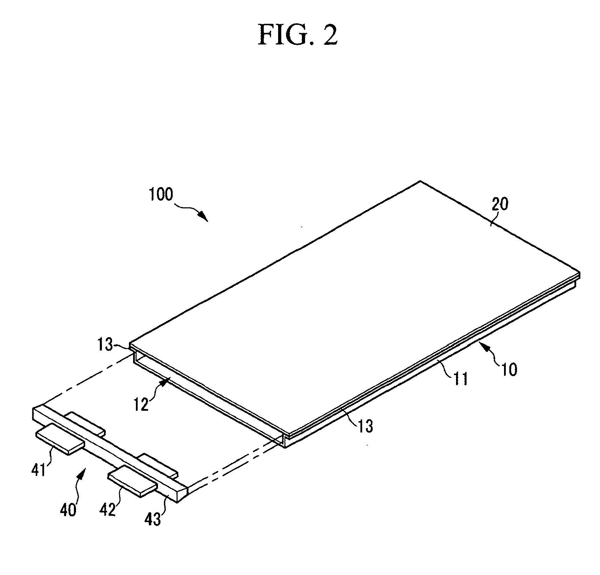

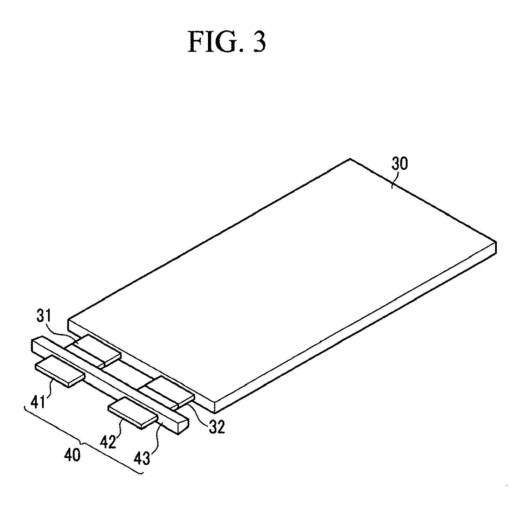

FIG. 1 is an exploded perspective view schematically showing a rechargeable battery according to a first exemplary embodiment of the present invention, FIG. 2 is a perspective view showing a state in which, when a base member and a cover member of FIG. 1 are coupled together, a cap assembly is separated from the base member and the cover member, and FIG. 3 is a perspective view schematically showing a state in which a electricity generation element of FIG. 1 and the cap assembly are coupled together.

As shown in FIGS. 1 to 3, a rechargeable battery 100 according to the first exemplary embodiment of the present invention includes a case being composed of a first metal plate or base member 10 and a second metal plate or cover member 20 welded to the base member 10 and configured to form a mounting space between the cover member 20 and the base member 10. The rechargeable battery 100 further includes an electricity generation element 30 placed in the mounting space, at least one connecting member 31, 32 or electrode tab 31 and 32 configured to respectively extend from the positive and negative electrodes of the electricity generation element 30 to provide electric connection, and a cap assembly 40. The cap assembly 40 includes electrode leads 41 and 42 coupled to the respective electrode tabs 31 and 32 and an insulator 43 coupled to the electrode leads 41 and 42 and placed between the base member 10 and the cover member 20.

The case of the battery forms five sides of a hexahedron, an opening 12 being the sixth side of the hexahedron. The cap assembly is configured to close the opening of the case 12, i.e. to form the sixth side of the hexahedron. The opening is preferably formed on a short side of the case, but may also be identical to the top or bottom side.

The base member 10 is formed as a polygon having edges, and includes a lead-in portion 11 on which the electricity generation element 30 is placed. The lead-in portion 11 forms a mounting space between the lead-in portion 11 and the cover member 20 coupled thereto, so the electricity generation element 30 can be mounted on the lead-in portion 11. In the exemplary embodiment of the present invention, although the base member 10 is illustrated to have a polygonal shape having edges, the base member 10 may have a shape that does not have edges, that is, a round shape. As described above, if the base member 10 has a round shape without edges, the electricity generation element 30 can be mounted on the base member 10 because the lead-in portion 11 is formed within the base member 10.

A base flange portion 13 protruding along the edges of the base member 10 is formed on the side of the base member 10. The cover member 20 is mounted on the base flange portion 13. The base flange portion 13 extends from a side wall of the base member 10 perpendicularly to the side wall away from the lead-in portion 11. In other words, the base flange portions 13 extends from the side wall parallel to the bottom surface of the base member 30. Thus the side wall and the base flange portion 13 provide a stepped profile of the sides of the base member 10.

The cover member 20 is welded to the base member 10. The cover member 20 is configured to have a plate form and is seated over the base member 10, so the cover member 20 and the base member 10 are coupled together along the edges of the base member 10, preferably along the base flange portions 13. The mounting space is formed within the base member 10 through the coupling of the cover member 20 and the base member 10. Accordingly, the electricity generation element 30 can be placed within the mounting space. The welding of the cover member 20 and the base member 10 may include arc welding, gas welding, or laser welding. However, the present invention may selectively use the arc welding, gas welding, and laser welding rather than being limited to one of them.

The base member 10 and the cover member 20 may be made of a steel material or a stainless steel material. Since the cover member 20 and the base member 10 are coupled by welding, the usual aluminum material is not used and the manufacturing cost can thereby be reduced. In more detail, the existing pouch type of rechargeable battery uses a method of applying a polypropylene coating to aluminum. On the other hand, a variety of metal materials may be used in the rechargeable battery according to the present exemplary embodiment. Accordingly, inexpensive metal materials can be used and the manufacturing cost can be reduced. It is illustrated that the cover member 20 and the base member 10 according to the exemplary embodiment of the present invention are coupled by welding. However, they may be coupled through a crimping method.

The electricity generation element 30 is placed in the mounting space formed by the coupling of the cover member 20 and the base member 10.

In an exemplary embodiment of the present invention, the electricity generation element 30 may be placed in the mounting space in a stack form or a jelly roll form. The electricity generation element of a stack form or a jelly roll form is known, so construction and a detailed description thereof are omitted in the exemplary embodiment of the present invention. The electrode tabs 31 and 32 are configured to protrude from one side of the electricity generation element 30 and extend from the respective positive and negative electrodes of the electricity generation element 30. The cap assembly 40 is coupled to the electrode tabs 31 and 32.

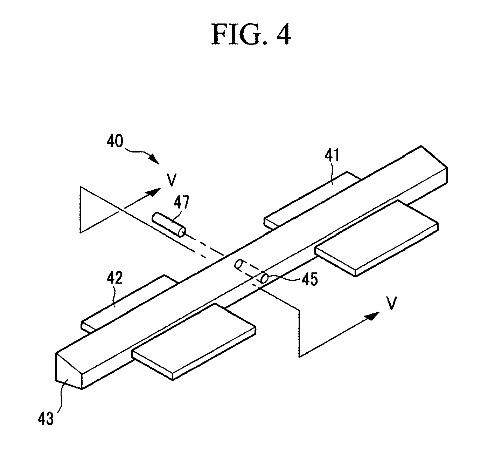

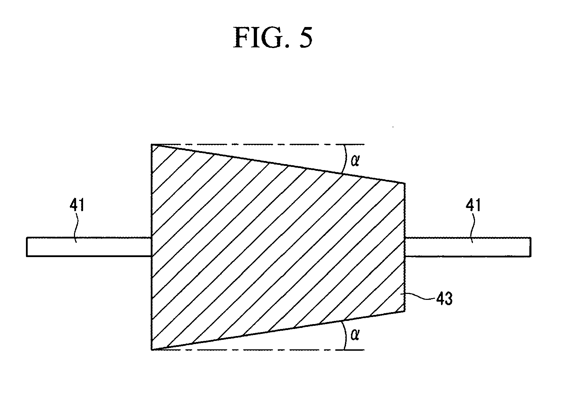

FIG. 4 is a perspective view showing a state in which the electrode leads 41, 42 of the cap assembly 40 and the insulator 43 are coupled together, and FIG. 5 is a diagram taken along line V-V of FIG. 4.

As shown in FIGS. 4 and 5, the cap assembly 40 includes the electrode leads 41 and 42 coupled to the respective electrode tabs 31 and 32 (refer to FIGS. 1 and 3) and the insulator 43 coupled to the electrode leads 41 and 42 and placed between the base member 10 and the cover member 20. Thus, the electrode leads 41, 42 extend through the insulator 43 and are fully surrounded by the insulator in their middle part. The electrode leads 41, 42 protrude through the left and right side faces of the insulator 43 in Fig. 4.

The electrode leads 41 and 42 may be coupled to the respective electrode tabs 31 and 32 by welding. The electrode leads 41 and 42 may be coupled to the electrode tabs 31 and 32 through the insulator 43. A pair of the electrode leads 41 and 42 are coupled to the negative and positive electrodes of the electrode tabs 31 and 32.

The insulator 43 is configured to support the electrode leads 41 and 42, and is coupled to the side where the base member 10 and the cover member 20 are coupled together. To this end, an opening portion 12 (refer to FIG. 2) is formed in the side where the base member 10 and the cover member 20 are coupled together. The base flange portion 13 is not formed at the side of the base member 10 where the opening portion 12 is formed.

The cap assembly 40 with the insulator 43 is forcibly fit into the opening portion 12. To this end, the insulator 43 has a larger size than that of the opening of the opening portion 12. The insulator 43 may be larger than the opening 12 by 0.01 to 0.1 mm, preferably 0.03-0.08mm. The insulator 43 may be larger in its length and/or height. In more detail, the insulator 43 is formed to have a polygonal shape having edges, and the side of the insulator 43 in a width direction may be tapered. The tapering faces of the insulator 43 may be formed in the width direction thereof on the top and bottom of the length direction. The tapering may give the insulator 43 the form of a wedge. Please note that in Fig. 5, after mounting the cap assembly 40 to the case, the left side of the insulator 43 faces the exterior and the right side faces the interior of the battery. Thus, the insulator becomes narrower from the periphery of the case to the interior of the case. The taper angle ( α ) of the insulator 43 may be in a range of 1 to 10°. If the taper angle of the insulator 43 is less than 1°, fitting pressure in the opening portion 12 is very low. If the taper angle of the insulator 43 is more than 10°, pressure is excessively applied between the opening portion 12 and the insulator 43. Accordingly, the taper angle of the insulator 43 is formed to be in a range of 1 to 10° so that the insulator 43 can be forcibly fit into the opening portion 12. Further, the insulator 43 is made of a polypropylene material.

The insulator 43 is made of a polypropylene material because when the insulator 43 is forcibly fit into the opening portion 12, as described above, it prevents the rechargeable battery 100 from exploding. In more detail, polypropylene has a property that it is easily melted at 110 ° C or more, preferably in a range of 100°-130°C. Thus, when the temperature rises because of an abnormality of the rechargeable battery 100, the insulator 43 melts, thereby opening a portion the opening portion 12 of the rechargeable battery 100. Consequently, since the opening portion 12 is opened, pressure within the rechargeable battery 100 drops. Accordingly, unexpected explosion can be prevented, and a structure with improved stability can be realized. In the exemplary embodiment of the present invention, the material of the insulator 43 is not limited to polypropylene, and may include a polymer material that melts at a temperature near 110 ° C.

When the insulator 43 is mounted, epoxy (not shown) may be used as an assistant mounting medium. The cap assembly 40 constructed with the epoxy, when the cover member 20 and the base member 10 are coupled together by welding, may be forcibly fit into the opening 12 and coupled together through thermal compression. That is, the epoxy and the insulator 43 are partially melted and thermally compressed by heating a portion where the cap assembly 40 is contacting with the cover member 20 and the base member 10 from outside while the cap assembly 40 is press-fitted to the opening portion 12. It should be understood that the cap assembly 40 is forcibly fitted into the opening portion 12, which is formed after coupling the base member and the cover member by welding, i.e. the residual heat after welding may be used for melting the cap assembly 40 and the insulator 43 when press-fitting the cap assembly 40 into the case.

Further, a through-hole 45 may be formed in the insulator 43 such that it faces the electricity generation element 30. Thus, the through hole 45 forms a connection from the exterior to the interior of the battery. The through-hole 45 is formed in order to inject an electrolytic into the rechargeable battery. A plug member 47 functions to selectively open or shut the through-hole 45 and is inserted into the through-hole 45. One or more through-holes 45 may be formed in the length direction of the insulator 43.

If gas is generated within the rechargeable battery when the rechargeable battery 100 is charged or discharged, the plug member 47 opens the through-hole 45 so that the gas within the rechargeable battery can be discharged. Further, a vent (not shown) may be formed in the through-hole 45 so that gas can be easily discharged through the vent.

As described above, in the rechargeable battery 100 according to the present exemplary embodiment, the cover member 20 is made of a metal material, and the base member 10 and the cover member 20 are coupled together by welding. Accordingly, a rechargeable battery of 8 mm or more in thickness can be realized.

The operation of the rechargeable battery constructed as above according to the present exemplary embodiment is described below.

First, the cover member 20 is welded to the base member 10. The electricity generation element 30 is placed in the space between the base member 10 and the cover member 20. Since the base member 10 and the cover member 20 are coupled together using welding, the rechargeable battery can be formed at a thickness of 8 mm or more.

Here, the opening portion 12 is formed on the side of the base member 10 and the cover member 20, and the cap assembly 40 is forcibly fit into the opening portion 12 and coupled thereto during the welding process. If during use the temperature of the rechargeable battery increases excessively, the insulator 43 melts, thereby opening the opening portion 12. Accordingly, the explosion of the rechargeable battery can be prevented.

An electrolytic solution is supplied through the through-hole 45 formed in the insulator 43 of the cap assembly 40. Since the plug member 47 can be inserted into the through-hole 45, the through-hole 45 may be selectively plugged.

As described above, the rechargeable battery of the present invention can be easily made at 8 mm or more in thickness and is configured to have a structure that is capable of preventing explosion when the pressure therein is abnormal.

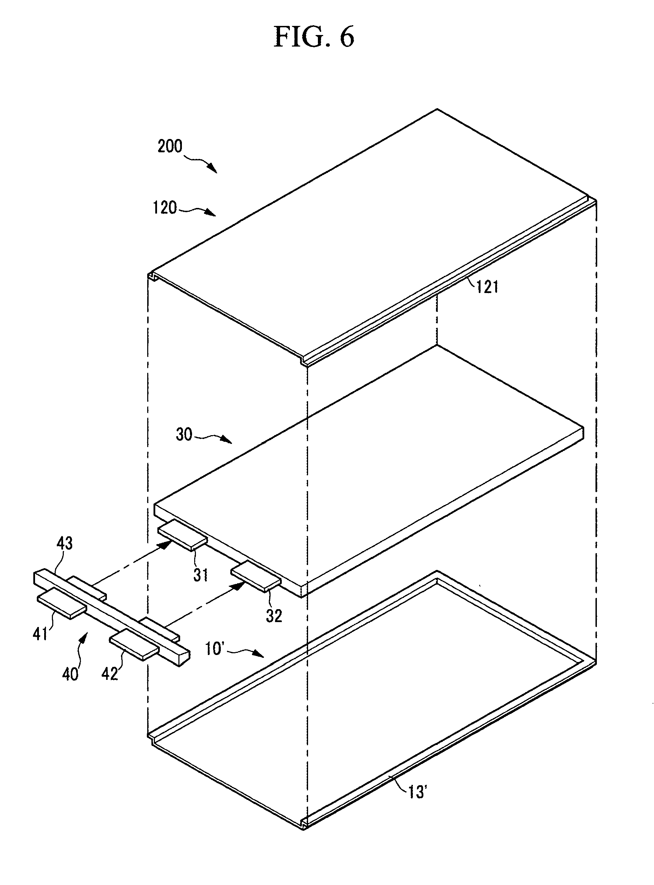

FIG. 6 is an exploded perspective view schematically showing a rechargeable battery according to a second exemplary embodiment of the present invention. The same reference numerals as those of FIGS. 1 to 5 are used to identify the same members having the same functions. Hereinafter, a detailed description of the same reference numerals is omitted.

As shown in FIG. 6, cover flange portions 121 are formed on the sides of a cover member 120. The cover flange portions 121 are formed along the edges of the cover member 120. The cover flange portions 121 are configured to adjoin a base flange portion 13' of a base member 10' and are coupled to the base flange portion 13' by welding.

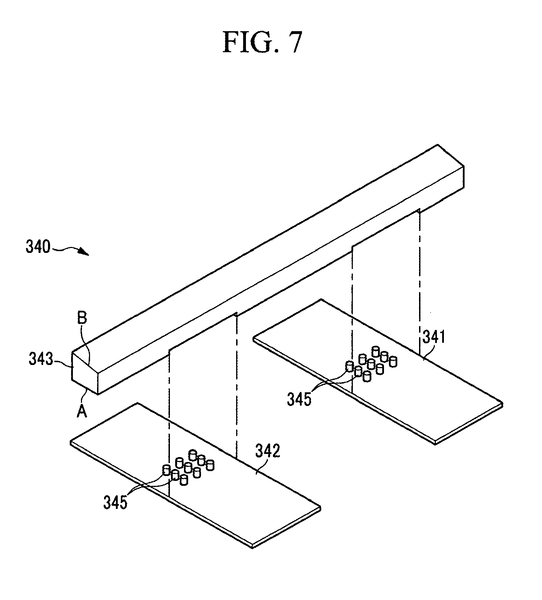

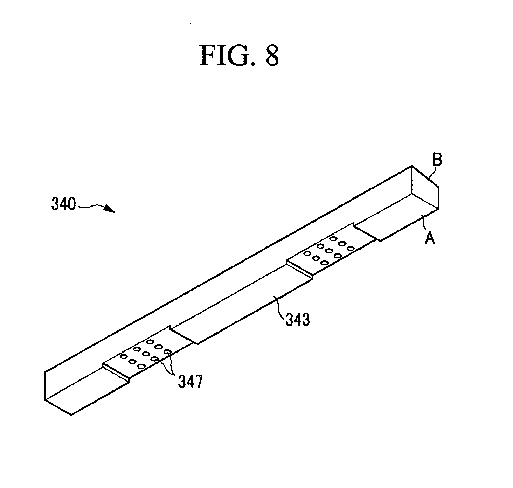

FIG. 7 is an exploded perspective view showing the cap assembly of a rechargeable battery according to a third exemplary embodiment of the present invention, and FIG. 8 is a perspective view showing a face in which insertion holes of an insulator of FIG. 7 are formed.

The same reference numerals as those of FIGS. 1 to 6 are used to identify the same members having the same functions. Hereinafter, a detailed description of the same reference numerals is omitted.

As shown in FIGS. 7 and 8, a cap assembly 340 of the rechargeable battery according to the third exemplary embodiment of the present invention includes a plurality of protrusion portions 345 formed in each of electrode leads 341, 342. Preferably, the protrusion portions 345 are formed on a first surface of each of the electrode leads 341, 342 facing the insulator 343. Even more preferably, the protrusion portions 345 are formed in the middle of each electrode lead 341, 342. Insertion holes 347 into which the respective protrusion portions 345 are inserted are formed in an insulator 343. Accordingly, the electrode leads 341 and 342 and the insulator 343 can be coupled together by forcibly inserting the protrusion portions 345 into the respective insertion holes 347. Preferably, the holes 347 are formed in a bottom surface A of the insulator 343 and the protrusion portions 345 are formed in a top surface of the electrode leads 341, 342. In order to facilitate a plane face after coupling the electrode leads 341, 342 to the insulator 343, the insulator 343 is provided with recesses or grooves matching the size of the electrode leads 341, 342, in Fig. 7 the width of the electrode leads 341, 342. The electrode leads 341, 342 fit into the recesses to form a plane surface of the insulator/electrode lead assembly.

Here, one face A of the insulator 343 in which the insertion holes 347 are formed is flat, and the other face B opposite to the face A is tapered. Accordingly, the electrode leads 341 can be easily coupled to the insulator 343, and the insulator 343 can be easily fit into the opening portion 12.

In another embodiment, the insulator bar 343 may be formed of two parts, a first part 343a having insertion holes 347a in its none-tapered bottom surface, its opposite surface being tapered, the second part 343b having insertion holes 347b in its none-tapered top surface, its opposite surface being tapered. The electrode leads 341, 342 may have protrusion portions 345a extending from its top surface upwards and protrusion portions 345b extending from its bottom surface downwards, such that the upper protrusion portions 345a fit into the matching insertion holes 347a of the first part of the insulator 343 and its lower protrusion portions 345b fit into the matching insertion holes 347b of the second part of the insulator bar 343.

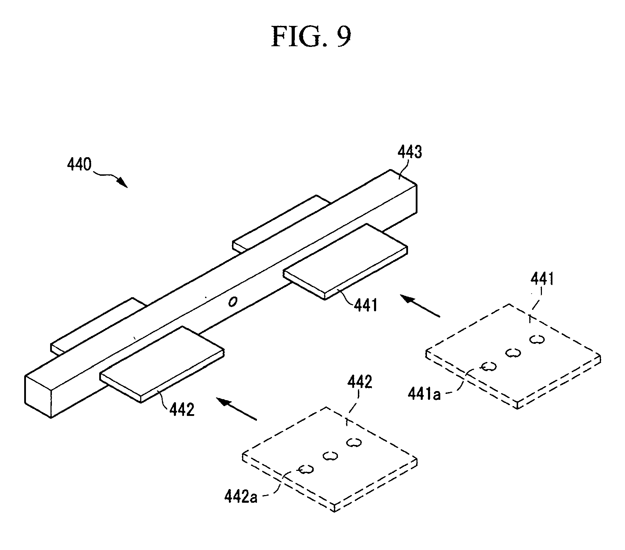

FIG. 9 is a perspective view showing an assembled state of electrode leads and an insulator of a cap assembly of a rechargeable battery according to a fourth exemplary embodiment of the present invention.

Referring to FIG. 9, cap assembly 440 is formed by coupling electrode leads 441 and 442 with an insulator 443, and at least one hole 441 a and 442a is formed at each of the electrode leads 441 and 442 in a region in which the electrode leads 441, 442 are surrounded by insulator material of the insulator 433 after assembling. The holes 441 a and 442a may be formed as a through hole or recess, which may improve coherence when the electrode leads 441 and 442 are coupled to the insulator 443, since the holes 441 a and 442a may increase friction force between the electrode leads 441 and 442 and the insulator 443.

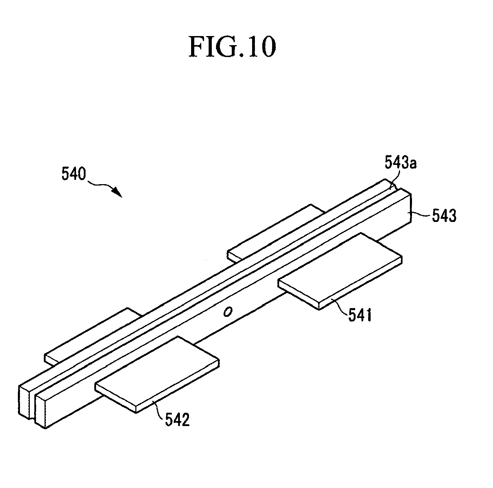

FIG. 10 is a perspective view showing an assembled state of electrode leads 541, 542 and an insulator 543 of a cap assembly 540 of a rechargeable battery according to a fifth exemplary embodiment of the present invention.

Referring to FIG. 10, cap assembly 540 is formed by coupling electrode leads 541 and 542 with an insulator 543, and a groove 543a is formed along the periphery of the insulator 543 which contacts with the base member and the cover member. The groove 543a is formed in the surfaces of the insulator 543 from which the electrode leads 541, 542 do not protrude. In Fig. 10, the electrode leads 541, 542 protrude from the front and back surface of the insulator 543 and the groove 543a is formed in the top, bottom and left and right side surfaces of the insulator 543. More than two grooves 543a may be formed in parallel, which may improve sealing property of the cap assembly 540.

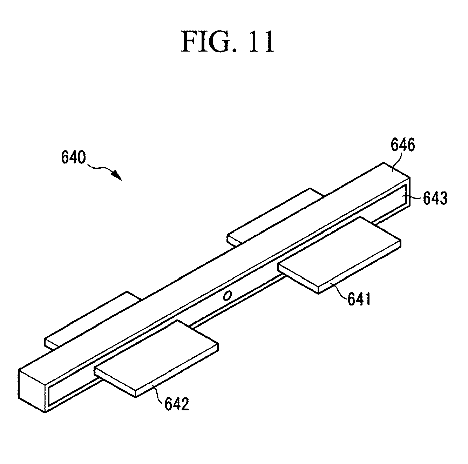

FIG. 11 is a perspective view showing an assembled state of electrode leads and an insulator of a cap assembly of a rechargeable battery according to a sixth exemplary embodiment of the present invention.

Referring to FIG. 11, cap assembly 640 is formed by coupling electrode leads 641 and 642 with an insulator 643, and the insulator 643 is covered with a metallic case 646 along the periphery of the insulator 643 which contacts with the base member and the cover member. The metallic case 646 is formed to cover the surfaces of the insulator 643 from which the electrode leads 641, 642 do not protrude. In Fig. 11, the electrode leads 641, 642 protrude from the front and back surface of the insulator 643 and the metallic case 646 covers the top, bottom and left and right side surfaces of the insulator 643. The insulator 643 covered with the metallic case 646 may be assembled to the base member and the cover member by welding.

The exemplary embodiments of the present invention have been described above with reference to the accompanying drawings. However, the present invention is not limited to the exemplary embodiments, but may be modified in various ways by those having ordinary skill in the art. Accordingly, the scope of the present invention should be defined by the claims.

## Claims

1. A rechargeable battery (100) comprising:
a case;
an electricity generation element (30) placed within said mounting space and having at least one connecting member (31, 32) protruding from a side of the electricity generation element (30) in a direction of the opening (12) of the case;
a cap assembly (40) including:
at least one electrode lead (41, 42) coupled to the at least one connecting member (31, 32) of the electricity generation element (30);
an insulator (43) supporting the at least one electrode lead (41, 42);
wherein the cap assembly (40) is configured to close the case opening (12)
**characterized in that**
the case is composed of a first metal plate (10) and a second metal plate (20, 120) being welded together to form five sides of a hexahedron, an opening (12) being the sixth side of the hexahedron, and being configured to form a mounting space for an electricity generation element (30) between them, and
at least one of the first or second metal plates (10, 20, 120) is provided with a generation element mounting portion (11) surrounded by side walls of the respective plate (10, 20, 120) with flange portions (13, 121) protruding perpendicularly from said side walls away from the generation element mounting portion (11).

2. The rechargeable battery (100) of claim 1, wherein the insulator (43) is made of a polymeric material having a melting point in between of 100°C to 130°C.

3. The rechargeable battery (100) of claim 2, wherein the insulator (43) is made of polypropylene.

4. The rechargeable battery (100) of one of the previous claims, wherein the insulator (43) of the cap assembly (40) has a tapered shape and/or the insulator (43) has the form of a single bar.

5. The rechargeable battery (100) of claim 4, first alternative, wherein the tapered angle (α) of the tapered insulator (43) ranges from 1° to 10° such that a cross section of the insulator surface facing the at least one connecting member (31, 32) is smaller than the cross section of its opposing surface facing the exterior.

6. The rechargeable battery (100) of one of the previous claims, wherein the insulator (43) of the cap assembly (40) surrounds the at least one electrode lead (41, 42) such that the at least one electrode lead (41, 42) protrudes through the insulator (43).

7. The rechargeable battery (100) of one of the previous claims, wherein the insulator (43) has a through-hole into which a plug member (47) or vent is inserted.

8. The rechargeable battery (100) of one of the previous claims, wherein the opening (12) of the case is identical to a short side of the case such that said short side is missing or identical to a top/bottom side of the case.

9. The rechargeable battery (100) of claim 1, wherein the first metal plate (10) comprises first flange portions (13) and said second metal plate (120) comprises second flange portions (121) for welding the second metal plate (120) to the first flange portions (13) of the first metal plate (10).

10. The rechargeable battery (100) of one of the previous claims, wherein first metal plate (10) and second metal plate (20) are formed of steel, stainless steel, or a metal different from aluminum or aluminum compounds.

11. The rechargeable battery (100) of claim 1, wherein the cap assembly (340, 440, 540, 640) further comprises:
a plurality of protrusions (345) extending from the surface of the at least one electrode lead (341, 342) and mating insertion holes (347) formed in the surface of the insulator (343) for coupling the at least one electrode lead (341, 342) to the insulator (343) by inserting the respective protrusions (345) into the mating insertion holes (347); or
at least one hole (441 a, 442a) formed in each of the at least one electrode lead (441, 442) in an area where the at least one electrode lead (441, 442) is supported by the insulator (443); or
a groove (543a) formed along the periphery of the insulator (543) contacting with the first metal plate (10) and the second metal plate (20, 120) of the case; or
a metallic case (646) covering the insulator (643) along the periphery of the insulator (643) which contacts with the first metal plate (10) and the second metal plate (20, 120).

12. Method for manufacturing a rechargeable battery (100), comprising the steps of:
forming a hexahedral case by coupling together a first metal plate (10) and a second metal plate (20, 120) to form five sides of the hexahedral case, the sixth side being an opening (12) of the case, the first and second metal plates (10, 20, 120) being configured to form a mounting space for an electricity generation element (30) between them;
providing an electricity generation element (30) having at least one connecting member (31, 32) protruding from a side of the electricity generation element (30);
forming a cap assembly (40) comprising:
at least one electrode lead (41, 341) to be coupled to the at least one connecting member (31, 32) of the electricity generation element (30);
an insulator (43) supporting the at least one electrode lead (41);
placing said electricity generation element (30) within said mounting space such that said at least one connecting member (31, 32) protrudes from a side of the electricity generation element (30) in a direction of the opening (12) of the case;
coupling said cap assembly (40) to the case by press-fitting the cap assembly (40) into the opening of the case,
**characterized in that**
the first and second metal plates (10, 20, 120) are coupled together via a welding process, and
the cap assembly (40) is further coupled to the case by at least partially melting the cap assembly (40) during this welding process.

13. The method of claim 12, wherein the cap assembly (40) is at least partially covered by epoxy, which melts during a welding process to additionally fix the cap assembly (40) to the case.

## Patentansprüche

1. Wiederaufladbare Batterie (100), umfassend:
ein Gehäuse;
ein Elektrizitäterzeugungselement (30), das in dem Einbauraum platziert ist und mindestens ein Verbindungsglied (31, 32) besitzt, das von einer Seite des Elektrizitäterzeugungselements (30) in eine Richtung der Öffnung (12) des Gehäuses absteht;
eine Kappenanordnung (40), aufweisend:
mindestens einen Elektrodenanschluss (41, 42), der mit dem mindestens einen Verbindungsglied (31, 32) des Elektrizitäterzeugungselements (30) verbunden ist;
einen den mindestens einen Elektrodenanschluss (41, 42) tragenden Isolator (43);
wobei die Kappenanordnung (40) zum Verschließen der Gehäuseöffnung (12) ausgestaltet ist,
**dadurch gekennzeichnet, dass**
das Gehäuse aus einer ersten Metallplatte (10) und einer zweiten Metallplatte (20, 120) besteht, die zur Ausbildung von fünf Seiten eines Hexaeders zusammengeschweißt sind, wobei eine Öffnung (12) die sechste Seite des Hexaeders ist, und zur Ausbildung eines Einbauraums für ein Elektrizitäterzeugungselement (30) zwischen ihnen ausgestaltet sind, und
mindestens eine der ersten oder zweiten Metallplatten (10, 20, 120) mit einem Erzeugungselementeinbauabschnitt (11) versehen ist, der von Seitenwänden der jeweiligen Platte (10, 20, 120) mit Flanschabschnitten (13, 121), die senkrecht von den Seitenwänden, von dem Erzeugungselementeinbauabschnitt (11) weg, abstehen, umgeben ist.

2. Wiederaufladbare Batterie (100) nach Anspruch 1, wobei der Isolator (43) aus einem Polymermaterial mit einem Schmelzpunkt von 100°C bis 130°C besteht.

3. Wiederaufladbare Batterie (100) nach Anspruch 2, wobei der Isolator (43) aus Polypropylen besteht.

4. Wiederaufladbare Batterie (100) nach einem der vorstehenden Ansprüche, wobei der Isolator (43) der Kappenanordnung (40) eine verjüngte Form aufweist und/oder der Isolator (43) die Form eines einzelnen Stabes aufweist.

5. Wiederaufladbare Batterie (100) nach Anspruch 4, erste Alternative, wobei der Verjüngungswinkel (α) des verjüngten Isolators (43) im Bereich von 1 ° bis 10 ° derart liegt, dass ein Querschnitt der Isolatorfläche, die dem mindestens einen Verbindungsglied (31, 32) zugewandt ist, kleiner ist als der Querschnitt seiner gegenüberliegenden der Außenseite zugewandten Fläche.

6. Wiederaufladbare Batterie (100) nach einem der vorstehenden Ansprüche, wobei der Isolator (43) der Kappenanordnung (40) den mindestens einen Elektrodenanschluss (41, 42) derart umgibt, dass der mindestens eine Elektrodenanschluss (41, 42) durch den Isolator (43) hindurch vorsteht.

7. Wiederaufladbare Batterie (100) nach einem der vorstehenden Ansprüche, wobei der Isolator (43) ein Durchgangsloch aufweist, in das ein Steckglied (47) oder eine Entlüftung eingesetzt ist.

8. Wiederaufladbare Batterie (100) nach einem der vorstehenden Ansprüche, wobei die Öffnung (12) des Gehäuses identisch zu einer Kurzseite des Gehäuses derart ist, dass diese Kurzseite fehlt oder identisch zu einer Ober-/Unterseite des Gehäuses ist.

9. Wiederaufladbare Batterie (100) nach Anspruch 1, wobei die erste Metallplatte (10) erste Flanschabschnitte (13) umfasst und die zweite Metallplatte (120) zweite Flanschabschnitte (121) umfasst, zum Schweißen der zweiten Metallplatte (120) an die ersten Flanschabschnitte (13) der ersten Metallplatte (10).

10. Wiederaufladbare Batterie (100) nach einem der vorstehenden Ansprüche, wobei die erste Metallplatte (10) und die zweite Metallplatte (20) aus Stahl, Edelstahl oder einem von Aluminium oder Aluminiumverbindungen unterschiedlichen Metall geformt sind.

11. Wiederaufladbare Batterie (100) nach Anspruch 1, wobei die Kappenanordnung (340, 440, 540, 640) ferner umfasst:
eine Vielzahl von Vorsprüngen (345), die sich von der Fläche des mindestens einen Elektrodenanschlusses (341, 342) erstrecken, und in der Fläche des Isolators (343) ausgebildete Gegeneinsetzlöcher (347) zum Verbinden des mindestens einen Elektrodenanschlusses (341, 342) mit dem Isolator (343) durch Einsetzen der jeweiligen Vorsprünge (345) in die Gegeneinsetzlöcher (347); oder
mindestens ein Loch (441 a, 442a), das in jedem des mindestens einen Elektrodenanschlusses (441, 442) ausgebildet ist, in einem Bereich, in dem der mindestens eine Elektrodenanschluss (441, 442) von dem Isolator (443) getragen wird; oder
eine entlang des Umfangs des Isolators (543) ausgebildete Nut (543a) in Kontakt mit der ersten Metallplatte (10) und der zweiten Metallplatte (20, 120) des Gehäuses; oder
ein entlang des Umfangs des Isolators (643) den Isolator (643) bedeckendes metallisches Gehäuse (646), das die erste Metallplatte (10) und die zweite Metallplatte (20, 120) kontaktiert.

12. Verfahren zur Herstellung einer wiederaufladbaren Batterie (100), umfassend die Schritte:
Ausbilden eines hexaedrischen Gehäuses durch Verbinden einer erste Metallplatte (10) und einer zweiten Metallplatte (20, 120) zur Ausbildung von fünf Seiten des hexaedrischen Gehäuses, wobei die sechste Seite eine Öffnung (12) des Gehäuses ist, wobei die ersten und zweiten Metallplatten (10, 20, 120) ausgestaltet sind, einen Einbauraum für ein Elektrizitäterzeugungselement (30) zwischen ihnen auszubilden;
Bereitstellen eines Elektrizitäterzeugungselements (30) mit mindestens einem Verbindungsglied (31, 32), das von einer Seite des Elektrizitäterzeugungselements (30) absteht;
Ausbilden einer Kappenanordnung (40), umfassend:
mindestens einen Elektrodenanschluss (41, 341) zum Verbinden mit dem mindestens einen Verbindungsglied (31, 32) des Elektrizitäterzeugungselements (30);
einen Isolator (43), der den mindestens einen Elektrodenanschluss (41) trägt;
Platzieren des Elektrizitäterzeugungselements (30) innerhalb des Einbauraums derart, dass das mindestens eine Verbindungselement (31, 32) von einer Seite des Elektrizitäterzeugungselements (30) in eine Richtung der Öffnung (12) des Gehäuses absteht;
Verbinden der Kappenanordnung (40) mit dem Gehäuse durch Einpressen der Kappenanordnung (40) in die Öffnung des Gehäuses,
**dadurch gekennzeichnet, dass**
die ersten und zweiten Metallplatten (10, 20, 120) durch ein Schweißverfahren miteinander verbunden werden, und
die Kappenanordnung (40) weiterhin mit dem Gehäuse durch zumindest teilweises Schmelzen der Kappenanordnung (40) während des Schweißverfahrens verbunden wird.

13. Verfahren nach Anspruch 12, wobei die Kappenanordnung (40) zumindest teilweise mit Epoxid bedeckt ist, das während eines Schweißverfahrens schmilzt, um die Kappenanordnung (40) zusätzlich am Gehäuse zu befestigen.

## Revendications

1. Batterie rechargeable (100) comprenant :
un boîtier ;
un élément (30) de génération d'électricité placé à l'intérieur dudit espace de montage et ayant au moins un élément de connexion (31, 32) faisant saillie à partir d'un côté de l'élément (30) de génération d'électricité dans une direction de l'ouverture (12) du boîtier ;
un assemblage de capuchon (40) comportant :
au moins un conducteur d'électrode (41, 42) couplé à l'au moins un élément de connexion (31, 32) de l'élément (30) de génération d'électricité ;
un isolateur (43) supportant l'au moins un conducteur d'électrode (41, 42) ;
dans laquelle l'assemblage de capuchon (40) est configuré pour fermer l'ouverture de boîtier (12) ;
**caractérisée en ce que** :
le boîtier est composé d'une première plaque métallique (10) et d'une deuxième plaque métallique (20, 120) soudées ensemble pour former cinq côtés d'un hexaèdre, une ouverture (12) étant le sixième côté de l'hexaèdre, et configurées pour former un espace de montage d'un élément (30) de génération d'électricité entre elles, et
au moins l'une des première ou deuxième plaques métalliques (10, 20, 120) est pourvue d'une partie de montage (11) d'élément de génération entourée de parois latérales de la plaque respective (10, 20, 120) avec des parties de rebord (13, 121) faisant saillie de manière perpendiculaire à partir desdites parois latérales à l'écart de la partie de montage (11) d'élément de génération.

2. Batterie rechargeable (100) de la revendication 1, dans laquelle l'isolateur (43) est réalisé à partir d'un matériau polymère dont le point de fusion se situe entre 100 °C et 130 °C.

3. Batterie rechargeable (100) de la revendication 2, dans laquelle l'isolateur (43) est réalisé en poly-propylène.

4. Batterie rechargeable (100) de l'une des revendications précédentes, dans laquelle l'isolateur (43) de l'assemblage de capuchon (40) a une forme conique et/ou l'isolateur (43) a la forme d'une seule barre.

5. Batterie rechargeable (100) de la revendication 4, en première variante, dans laquelle l'angle conique (α) de l'isolateur conique (43) se trouve dans la plage de 1 ° à 10° de sorte qu'une coupe transversale de la surface de l'isolateur faisant face à l'au moins un élément de connexion (31, 32) soit plus petite que la coupe transversale de sa surface opposée regardant l'extérieur.

6. Batterie rechargeable (100) de l'une des revendications précédentes, dans laquelle l'isolateur (43) de l'assemblage de capuchon (40) entoure l'au moins un conducteur d'électrode (41, 42) de sorte que l'au moins un conducteur d'électrode (41, 42) fasse saillie à travers l'isolateur (43).

7. Batterie rechargeable (100) de l'une des revendications précédentes, dans laquelle l'isolateur (43) présente un trou traversant dans lequel est inséré un élément de bouchon (47) ou un évent.

8. Batterie rechargeable (100) de l'une des revendications précédentes, dans laquelle l'ouverture (12) du boîtier est identique à un côté court du boîtier de sorte que ledit côté court soit manquant ou identique à un côté supérieur/inférieur du boîtier.

9. Batterie rechargeable (100) de la revendication 1, dans laquelle la première plaque métallique (10) comprend des premières parties de rebord (13) et ladite deuxième plaque métallique (120) comprend des deuxièmes parties de rebord (121) pour le soudage de la deuxième plaque métallique (120) aux premières parties de rebord (13) de la première plaque métallique (10).

10. Batterie rechargeable (100) de l'une des revendications précédentes, dans laquelle la première plaque métallique (10) et la deuxième plaque métallique (20) sont réalisées en acier, en acier inoxydable, ou en métal différent de l'aluminium ou des composés d'aluminium.

11. Batterie rechargeable (100) de la revendication 1, dans laquelle l'assemblage de capuchon (340, 440, 540, 640) comprend en outre :
une pluralité de saillies (345) s'étendant à partir de la surface de l'au moins un conducteur d'électrode (341, 342) et des trous d'insertion conjugués (347) formés dans la surface de l'isolateur (343) pour coupler l'au moins un conducteur d'électrode (341, 342) à l'isolateur (343) en insérant les saillies respectives (345) dans les trous d'insertion conjugués (347) ; ou
au moins un trou (441 a, 442a) formé dans chacun de l'au moins un conducteur d'électrode (441, 442) dans une zone où l'au moins un conducteur d'électrode (441, 442) est supporté par l'isolateur (443) ; ou
une rainure (543a) formée le long de la périphérie de l'isolateur (543) en contact avec la première plaque métallique (10) et la deuxième plaque métallique (20, 120) du boîtier ; ou
un boîtier métallique (646) couvrant l'isolateur (643) le long de la périphérie de l'isolateur (643) qui est en contact avec la première plaque métallique (10) et la deuxième plaque métallique (20, 120).

12. Procédé de fabrication d'une batterie rechargeable (100), comprenant les étapes qui consistent à :
former un boîtier hexaédrique en couplant conjointement une première plaque métallique (10) et une deuxième plaque métallique (20, 120) afin de former cinq côtés du boîtier hexaédrique, le sixième côté étant une ouverture (12) du boîtier, les première et deuxième plaques métalliques (10, 20, 120) étant configurées pour former un espace de montage pour un élément (30) de génération d'électricité entre elles ;
fournir un élément (30) de génération d'électricité ayant au moins un élément de connexion (31, 32) faisant saillie à partir d'un côté de l'élément (30) de génération d'électricité ;
former un assemblage de capuchon (40), comprenant :
au moins un conducteur d'électrode (41, 341) à coupler à l'au moins un élément de connexion (31, 32) de l'élément (30) de génération d'électricité ;
un isolateur (43) supportant l'au moins un conducteur d'électrode (41) ;
placer ledit élément (30) de génération d'électricité dans ledit espace de montage de sorte que ledit au moins un élément de connexion (31, 32) fasse saillie à partir d'un côté de l'élément (30) de génération d'électricité dans une direction de l'ouverture (12) du boîtier ;
coupler ledit assemblage de capuchon (40) au boîtier par ajustement à la presse de l'assemblage de capuchon (40) dans l'ouverture du boîtier,
**caractérisé en ce que** :
les première et deuxième plaques métalliques (10, 20, 120) sont couplées ensemble par l'intermédiaire d'un processus de soudage, et
l'assemblage de capuchon (40) est en outre couplé au boîtier par la fusion au moins partielle de l'assemblage de capuchon (40) pendant ce processus de soudage.

13. Procédé de la revendication 12, dans lequel l'assemblage de capuchon (40) est au moins partiellement couvert d'époxy, qui fond au cours d'un processus de soudage pour fixer en outre l'assemblage de capuchon (40) au boîtier.
